(19) Europäisches Patentamt
European Patent Office
Office européen des brevets

(11) **EP 2 458 877 A1**

(12) **EUROPEAN PATENT APPLICATION**

(43) Date of publication:
**30.05.2012 Bulletin 2012/22**

(51) Int Cl.:
***H04N 13/00*** *(2006.01)*

(21) Application number: **10306300.4**

(22) Date of filing: **26.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Boisson, Guillaume**
**35137 Pleumeleuc (FR)**
• **Kerbiriou, Paul**
**35235 Throrigne Fouillard (FR)**
• **Lopez, Patrick**
**35450 Livre sur Changeon (FR)**

(74) Representative: **Streit, Arend**
**Deutsche Thomson OHG**
**European Patent Operations**
**Karl-Wiechert-Allee 74**
**30625 Hannover (DE)**

(54) **Occlusion layer extension**

(57) The invention relates to the encoding of visual data captured by two or more cameras in a layered depth format.

The invention proposes a method and device for layered depth image encoding. The device is adapted for encoding at least one occlusion layer of the layered depth image with a greater horizontal width than a foreground layer of the layered depth image. The method comprises a corresponding step. Further, a storage medium and a data structure for layered depth image encoding are proposed. In said data structure, at least one occlusion layer of the layered depth image has a greater horizontal width than a foreground layer of the layered depth image.

The additional horizontal width can be used for conveying the part of information which is provided in the images/videos captured by the at least two cameras but not comprised in the foreground layer.

Fig. 4

EP 2 458 877 A1

**Description**

TECHNICAL FIELD

The invention relates to the technical field of encoding of visual data in a layer depth format.

BACKGROUND OF THE INVENTION

Layered depth image (LDI) is a way to encode information for rendering of three dimensional images. Similarly, layered depth video (LDV) is a way to encode information for rendering of three dimensional videos.

LDI/LDV uses a foreground layer and at least one background layer for conveying information. The background layer is called occlusion layer, also. The foreground layer comprises a main colour image/video frame with associated main depth map. The at least one background layer comprises a background colour image/video frame with associated background depth map. Commonly, the occlusion layer is sparse in that it only includes image content which is covered by foreground objects in the main layer and corresponding depth information of the image content occluded by foreground objects.

A way to generate LDI or LDV is to capture a same scene with two or more cameras from different view points. The images/ videos captured by the two cameras are then warped, i.e. shifted, and fused for generating the main image/ video which depicts the same scene from a central view point located in between the different view points.

Further, the main depth map associated with the main image/ video frame can be generated using the two captured images/video frames. The main depth map assigns a depth value, a disparity value or a scaled value homogeneous with disparity to each pixel of the main image/video frame wherein the disparity value assigned is inversely proportional to the distance of an object, to which the respective pixel belongs, from a main image plane.

SUMMARY OF THE INVENTION

According to prior art, the foreground layer and the background layer are of the same horizontal width. The inventors recognized that this same size does not allow to convey all the information provided in the images/videos captured by the at least two cameras.

Therefore, the inventors propose a data structure for a layered depth image/video frame which allows that at least one occlusion layer of the layered depth image/video frame has a greater horizontal width than a foreground layer of the layered depth image/video frame.

The inventors further propose a storage medium carrying at least one encoded layered depth image/video frame wherein at least one occlusion layer of the layered depth image/video frame has a greater horizontal width than a foreground layer of the layered depth image/video frame.

And, the inventors propose a method for layered depth image/video frame encoding, said method comprising encoding at least one occlusion layer of the layered depth image/video frame with a greater horizontal width than a foreground layer of the layered depth image/video frame.

Similarly, a device for layered depth image/video frame encoding is proposed, said device being adapted for encoding at least one occlusion layer of the layered depth image/video frame with a greater horizontal width than a foreground layer of the layered depth image/video frame. The additional horizontal width can be used for conveying the part of information which is provided in the images/videos captured by the at least two cameras but not comprised in the foreground layer.

The features of further advantageous embodiments are specified in the dependent claims.

BRIEF DESCRIPTION OF THE DRAWINGS

Exemplary embodiments of the invention are illustrated in the drawings and are explained in more detail in the following description. The exemplary embodiments are explained only for elucidating the invention, but not limiting the invention's disclosure, scope or spirit defined in the claims.

In the figures:

Fig. 1    depicts an exemplary depth map;

Fig. 2    depicts an exemplary multi-camera-system;

Fig. 3    depicts an exemplary stereoscopic shooting; and

Fig. 4    depicts an exemplary occlusion layer extension.

EXEMPLARY EMBODIMENTS OF THE INVENTION

The invention may be realized on any electronic device comprising a processing device correspondingly adapted. For instance, the invention may be realized in a mobile phone, a personal computer, a digital still camera system, or a digital video camera system.

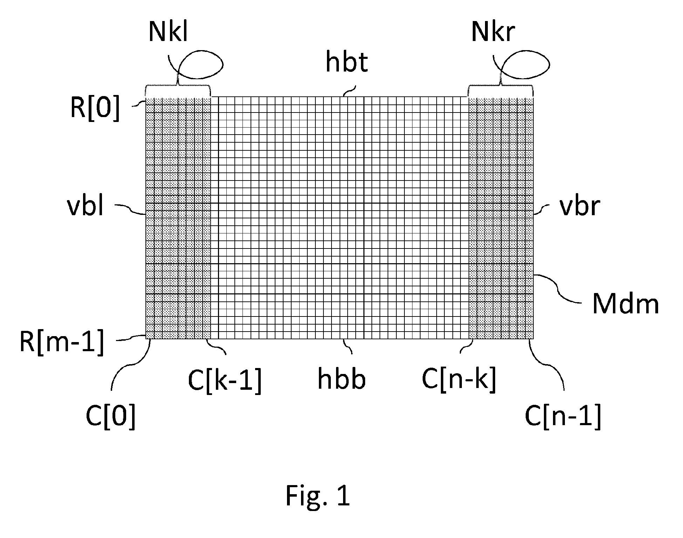

Fig. 1 depicts an exemplary depth map Mdm. The depth map Mdm consists of depth values, disparity values or scaled values homogeneous with disparity. The values are arranged in columns C[0],...,C[n] and rows R[0], ..., R[m9. The depth map has vertical boundaries vbl, vbr, also called lateral boundaries or lateral borders, and horizontal boundaries hbt, hbb, also called top and bottom boundary or top and bottom border. A neighbourhood area Nkl of width k of the left vertical boundaries vbl comprises columns C[0], C[1], ..., C[k-1] and a neighbourhood area Nkr of width k of the right vertical boundaries vbr comprises columns C[n-k+1], C[n-k+2], ..., C[n]. There is no restriction for the width of neighbourhoods that is a single neighbourhood can cover the entire depth map Mdm, i.e. k=n, or a neighbourhood of width k1 of the left vertical boundaries vbl and a neighbourhood of width k2 of the right vertical boundaries vbr can cover the whole frame, in case k1+k2=n+1. The neighbourhood width may also be restricted to only one-pixel column.

In LDI/LDV, such exemplary depth map Mdm is associated with an exemplary image. For each pixel in the exemplary image there is a value in the exemplary depth map. The set of map and image is called a layer. If the layer is the foreground layer, also called the main layer, the image is called the foreground image and is fully populated with pixels. The associated depth map is called main depth map Mdm in the following.

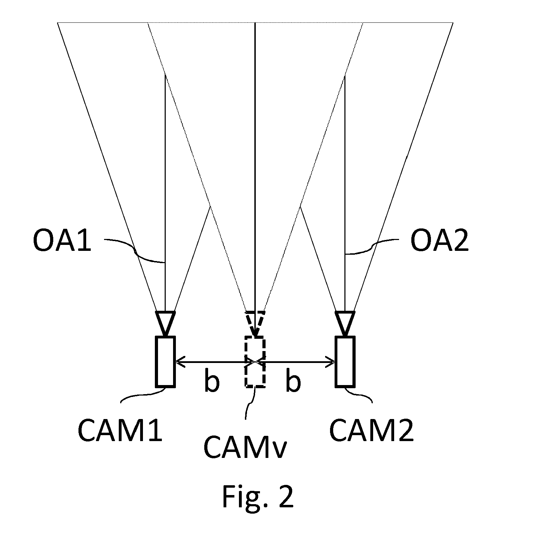

In an exemplary embodiment the main depth map Mdm and the associated foreground image CV result from processing of two views LV, RV. As shown in Fig. 2, the two views LV, RV are captured by two cameras CAM1, CAM2 having parallel optical axes OA1, OA2, a focal length f and an inter-camera baseline distance 2*b. Further, let z_conv denote the depth of the convergence plane which can be located at an infinite distance if no post-processing shifting is applied to rectified views. The two cameras CAM1, CAM2 are located at said two different view points. The two views LV, RV are depicting said scene from two different view points and are pre-processed in order to equalize colours and to rectify geometrical distortions. Thus, cameras' intrinsic and extrinsic parameters are unified. In a two-camera setup, the foreground image CV thus appears as being shot with a virtual camera CAMv located in between the two cameras CAM1, CAM2 having an inter-camera distance to each of said cameras of b. In an odd camera number setup, the foreground image CV is computed by rectification of pictures shot by the central camera.

Under these conditions, disparity d of an object located a depth z is given by:

$$d = h - f*b/z \qquad\qquad (1)$$

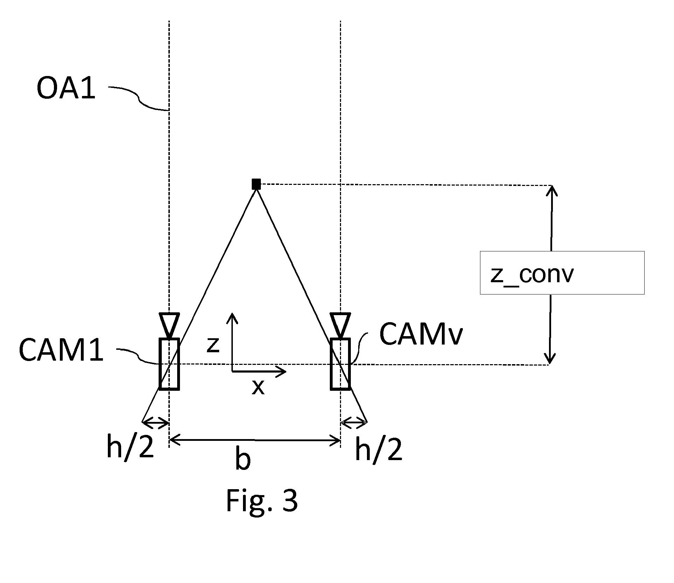

Where h emulates the sensor shift required to tune the position of the convergence plane. As said previously, if no processing is applied, the convergence plane is located at an infinite distance and h is equal to zero. As exemplarily depicted in Fig. 3, in which z_conv is located at a finite distance:

$$h = f*b/z\_conv \qquad\qquad (2)$$

In case the main depth map Mdm comprises a scaled value D homogeneous with disparity d, the relation among the two can be

$$D=255*(d\_max - d) / (d\_max - d\_min) \qquad\qquad (3)$$

In case of scaled values comprised in the main depth map, either the parameters d_max and d_min are transmitted as metadata or corresponding depth values z_near and z_far are transmitted wherein

$$z\_near = f*b/(h - d\_max) \qquad (4)$$

and

$$z\_far = f*b/(h - d\_min) \qquad (5)$$

in accordance with equation (1).

The exemplary embodiment is chosen for explanation of the gist of the invention, only. The invention can be applied to multi-camera-systems with cameras with non-parallel optical axes, for instance by transforming the images captured by such cameras into corresponding virtual images virtually captured by virtual parallel optical axes cameras. Furthermore, the invention can be adapted to non-rectified views and/or more than two cameras. The invention further does not relate to how the foreground layer image or the main depth map has been determined.

The exemplary embodiment comprises determining, within neighbourhood areas Nkl, Nkr of the lateral borders vbl, vbr of the main depth map Mdm, the most close by object which corresponds to determining the smallest disparity $min(d)$. Since disparity is negative for objects located in front of the convergence plane, this corresponds to determining the largest absolute among the negative disparities in the neighbourhood areas of the lateral borders.

In case the main depth map Mdm comprises scaled values homogeneous with disparity, $|min(d)|$ can be determined from a maximum scaled value max(D) in the main depth map Mdm using the parameters transmitted as metadata. In case $d\_max$ and $d\_min$ are transmitted this is done according:

$$|min(d)| = |d\_max - max(D)*(d\_max-d\_min)/255| \qquad (6)$$

In case $z\_near$ and $z\_far$ are transmitted, $|min(d)|$ can be determined using equations (4), (5) and (6).

In case $z\_conv$ is undetermined, $|(min (d) - h)|$ is determined.

The determined largest absolute among the negative disparities in neighbourhood areas Nkr, Nkl of both lateral borders vbl, vbr is the additional width by which the occlusion layer image EOV and/or the occlusion layer depth map has to be extended on both sides in order to allow all information not comprised in the foreground image but provided by the two views to be conveyed.

The width of the neighbourhood areas can be chosen differently. For instance, the neighbourhood areas can consist of the outmost columns C[0], C[n] only. Or, for sake of robustness the neighbourhood areas can consist of eight columns on each side C[0], ..C[7], and C[n-7], ..., C[n]. Or, for sake of exhaustiveness the neighbourhood areas are chosen such that they cover the entire main depth map such that the largest absolute among all negative disparities comprised in the main depth map is determined.

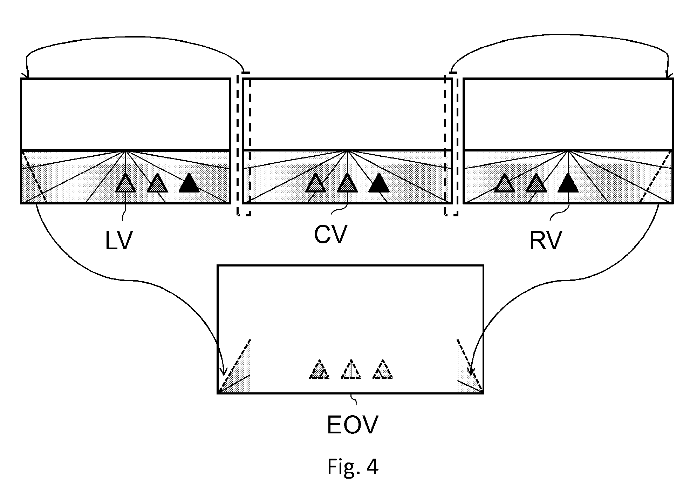

In the latter case, instead of the determined largest absolute a reduced value can be used. The reduced value compensates the largest absolute among the negative disparities by the distance of the column in which the largest absolute from the respective nearest lateral border. That is, given the largest absolute among the negative disparities is $|min(d)|$ and was found in column $j$ of a main depth map of width $n$, the occlusion layer is extended on both sides by $(|min(d)|-min (j; n+1- j))$. So, the width of the occlusion layer image EOV and/or the occlusion layer depth map is $n+2*(|min(d)|-min (j; n+1- j))$. As exemplarily depicted in Fig. 4, the occlusion layer image EOV is sparse, i.e. populated only with information not present in the foreground image. The information can be copied or warped by being projected on the central view.

In case of LDV, the occlusion extension can be determined for each frame independently. Or, groups of frames or the entire video are analysed for the largest absolute among the negative disparities in the neighbourhood areas of the lateral borders of the respective frames and the determined largest absolute is then used to extend the occlusion layers of the respective group of frames or the entire video.

The analysis for the largest absolute among the negative disparities in the neighbourhood areas of the lateral borders can be performed at decoder side the same way as at encoder side for correct decoding of the occlusion layer. Or, side information about the extension is provided. The former is more efficient in terms of encoding, the latter requires less computation at decoder side.

**Claims**

1. Data structure for layered depth image wherein at least one occlusion layer of the layered depth image has a greater horizontal width than a foreground layer of the layered depth image.

2. Storage medium carrying at least one encoded layered depth image wherein at least one occlusion layer of the layered depth image has a greater horizontal width than a foreground layer of the layered depth image.

3. Method for layered depth image encoding, said method comprising encoding at least one occlusion layer of the layered depth image with a greater horizontal width than a foreground layer of the layered depth image.

4. Method for layered depth image decoding, said method comprising decoding at least one occlusion layer of the layered depth image with a greater horizontal width than a foreground layer of the layered depth image.

5. Device for layered depth image encoding, said device being adapted for encoding at least one occlusion layer of the layered depth image with a greater horizontal width than a foreground layer of the layered depth image.

6. Device for layered depth image decoding, said device being adapted for decoding at least one occlusion layer of the layered depth image with a greater horizontal width than a foreground layer of the layered depth image.

7. Data structure of claim 1, storage medium of claim 2, method of claim 3 or 4, or device of claim 5 or 6, wherein the horizontal width of the occlusion layer is proportional to a maximum disparity value comprised in lateral boundary areas of a main depth map comprised in the foreground layer.

8. Data structure of claim 1, storage medium of claim 2, method of claim 3 or 4, or device of claim 5 or 6, wherein the horizontal width of the occlusion layer is proportional to a maximum disparity value comprised in a main depth map comprised in the foreground layer.

9. Data structure of claim 1, storage medium of claim 2, method of claim 3 or 4, or device of claim 5 or 6, wherein the horizontal width of the occlusion layer is proportional to a difference between a maximum disparity value among disparity values comprised in a main depth map comprised in the foreground layer and a minimum of distances of lateral boundaries of the foreground depth map to a column of the main depth map which comprises said maximum disparity value.

10. Data structure of claim 1, storage medium of claim 2, method of claim 3 or 4, or device of claim 5 or 6, wherein the layered depth image is comprised in a sequence of layered depth images of same occlusion layer widths.

11. Data structure of claim 1, storage medium of claim 2, method of claim 3 or 4, or device of claim 5 or 6, wherein a background image comprised in the occlusion layer has a greater horizontal width than a foreground image comprised in the foreground layer.

12. Data structure of claim 1, storage medium of claim 2, method of claim 3 or 4, or device of claim 5 or 6, wherein a background depth map comprised in the occlusion layer has a greater horizontal width than a foreground depth map comprised in the foreground layer.

13. Storage medium of claim 2, wherein an encoded value indicating an amount of columns by which the horizontal widths differ is further carried by the storage medium.

14. Method of claim 4, further comprising decoding a value indicative of an amount of columns by which the horizontal widths differ.

15. Device of claim 6, further adapted for decoding a value indicative of an amount of columns by which the horizontal widths differ.

16. Data structure of claim 1, storage medium of claim 2, method of claim 3 or 4, or device of claim 5 or 6, wherein the layered depth image is comprised in a sequence of layered depth images of varying occlusion layer widths.

Fig. 1

Fig. 2

Fig. 3

LV          CV          RV

EOV

Fig. 4

# EP 2 458 877 A1

| | Europäisches Patentamt European Patent Office Office européen des brevets | **EUROPEAN SEARCH REPORT** | Application Number EP 10 30 6300 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X Y A | WO 2010/052637 A1 (KONINKL PHILIPS ELECTRONICS NV [NL]; PHILIPS INTELLECTUAL PROPERTY [DE] 14 May 2010 (2010-05-14) * the whole document * ----- | 1-6, 10-16 7,8 9 | INV. H04N13/00 |
| Y A | EP 2 180 449 A1 (KONINKL PHILIPS ELECTRONICS NV [NL]; PHILIPS INTELLECTUAL PROPERTY [DE] 28 April 2010 (2010-04-28) * the whole document * ----- | 7,8 1-6,9-16 | |
| A | WO 2009/091563 A1 (THOMSON LICENSING [FR]; HUANG YU [US]; LLACH JOAN [US]) 23 July 2009 (2009-07-23) * the whole document * ----- | 1-16 | |
| A | YU HUANG ET AL: "A layered method of visibility resolving in depth image-based rendering", 19TH INTERNATIONAL CONFERENCE ON PATTERN RECOGNITION, 2008: ICPR 2008; 8 - 11 DEC. 2008, TAMPA, FLORIDA, USA, IEEE, PISCATAWAY, NJ, 8 December 2008 (2008-12-08), pages 1-4, XP031412254, ISBN: 978-1-4244-2174-9 * the whole document * ----- | 1-16 | TECHNICAL FIELDS SEARCHED (IPC) H04N |

The present search report has been drawn up for all claims

| Place of search | Date of completion of the search | Examiner |
|---|---|---|
| Munich | 11 March 2011 | Doswald, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 30 6300

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2011

| Patent document cited in search report | | Publication date | Patent family member(s) | | Publication date |
|---|---|---|---|---|---|
| WO 2010052637 | A1 | 14-05-2010 | NONE | | |
| EP 2180449 | A1 | 28-04-2010 | WO 2010046817 | A1 | 29-04-2010 |
| WO 2009091563 | A1 | 23-07-2009 | NONE | | |

EPO FORM P0459

For more details about this annex : see Official Journal of the European Patent Office, No. 12/82